# FASCICULE DE BREVET EUROPEEN

(11) **EP 2 663 885 B1**
(45) Date de publication et mention de la délivrance du brevet: **10.12.2014**
(21) Numéro de dépôt: 12700630.2
(22) Date de dépôt: 06.01.2012
(51) Int. Cl.: G01V 5/00

(54) **PROCEDE DE DETECTION DE MATIERE NUCLEAIRE PAR INTERROGATION NEUTRONIQUE ET SYSTEME DE DETECTION ASSOCIE**
VERFAHREN ZUR ERKENNUNG EINES NUKLEAREN MATERIALS MITTELS NEUTRONENABFRAGE UND ZUGEHÖRIGES DETEKTIONSSYSTEM
METHOD FOR DETECTING NUCLEAR MATERIAL BY MEANS OF NEUTRON INTERROGATION, AND RELATED DETECTION SYSTEM

(30) Priorité: 10.01.2011 FR 1150158
(43) Date de publication de la demande: 20.11.2013
(73) Titulaire: Commissariat à l'Énergie Atomique et aux Énergies Alternatives, 75015 Paris (FR)
(72) Inventeur: PEROT, Bertrand, F-13770 Venelles (FR); CARASCO, Cédric, F-83560 Vinon sur Verdon (FR)
(74) Mandataire: Ahner, Philippe
(86) Numéro de dépôt international: PCT/EP2012/050163
(87) Numéro de publication internationale: WO 2012/095357

(56) Documents cités:
- WO-A2-2007/144589
- WO-A2-2010/099331
- FR-A1- 2 652 651
- FR-A1- 2 945 631

## Description

### Domaine technique et art antérieur

L'invention concerne un procédé de détection de matière nucléaire par interrogation neutronique. L'invention concerne également un système de détection de matière nucléaire qui met en oeuvre le procédé de l'invention.

La matière nucléaire est détectable par des mesures passives conventionnelles sous réserve qu'il n'y ait pas de blindage faisant écran, entre la matière nucléaire et le détecteur qui effectue les mesures, aux rayonnements neutroniques et gamma émis par la matière nucléaire. Dans le cas où l'émission neutronique est masquée par un blindage, des systèmes actifs d'interrogation neutronique doivent être envisagés comme, par exemple, la détection par interrogation neutronique.

La détection de matière nucléaire par interrogation neutronique s'effectue en provoquant des fissions dans la matière nucléaire. Chaque fission génère l'émission simultanée de plusieurs neutrons (typiquement 4 à 5 neutrons) et de rayonnements gamma (typiquement 6 à 8 photons gamma). Neutrons et rayonnements gamma issus d'une réaction de fission sont détectés en coïncidence. La matière nucléaire se distingue de la matière non nucléaire par le fait que les neutrons et les photons gamma qui sont émis en coïncidence sont en plus grand nombre pour de la matière nucléaire que pour de la matière non nucléaire. En outre, une discrimination temporelle, mise en oeuvre par la technique de la particule associée, permet de distinguer avec précision les coïncidences dues aux particules de fission de celles dues aux matériaux non nucléaires.

Les dispositifs de détection de neutrons et de photons gamma de l'art connu sont formés de détecteurs placés autour de l'objet à inspecter. Les détecteurs sont positionnés proches les uns des autres pour obtenir un bon rendement de détection. Un phénomène gênant qui apparaît lors de la détection est le phénomène de diaphonie. La diaphonie se produit lorsqu'un neutron ou un photon gamma détecté dans un premier détecteur diffuse dans un détecteur voisin où il est également détecté. Ceci provoque alors une fausse coïncidence, puisque deux signaux sont détectés qui ne correspondent pas à deux particules distinctes mais à une seule particule.

Les solutions actuelles pour résoudre le problème de la diaphonie sont:
- l'éloignement des détecteurs les uns des autres,
- l'introduction de parois entre les détecteurs, ou encore
- le rejet systématique des coïncidences pour deux détecteurs voisins.

Ces solutions présentent toutefois de nombreux inconvénients. L'éloignement des détecteurs diminue le rendement de détection du fait de la diminution de la couverture angulaire utile, ce qui affecte très fortement la probabilité de détection des coïncidences d'ordre élevé. L'introduction de parois entre les détecteurs diminue également la couverture angulaire utile, puisque les parois séparatrices ne sont pas aptes à la détection. Par ailleurs, ces parois augmentent la taille et alourdissent le système de détection. Enfin, le rejet systématique des coïncidences pour deux détecteurs voisins nuit considérablement à l'efficacité de la détection.

Le document WO 2007/144589 A2 divulgue un détecteur de radiations de haute énergie et le procédé associé. Le détecteur comprend une matrice de pixels détecteurs et un ensemble de circuits de lecture qui collectent les charges détectées par les pixels détecteurs.

Le document FR 2 945 631 A1 divulgue le principe de l'analyse d'un objet par interrogation neutronique à l'aide d'un tube à particule associée.

Le procédé de détection de l'invention ne présente pas les inconvénients mentionnés ci-dessus.

### Exposé de l'invention

En effet, l'invention concerne un procédé de détection de matière nucléaire dans un objet, tel que défini par la revendication 1, sur la base d'un comptage d'événements qui surviennent dans l'objet à la suite d'une interrogation neutronique de l'objet pendant une durée ΔT, le procédé comprenant une pluralité d'étapes de détection d'impulsions en coïncidence par la technique de la particule associée, une étape de détection d'impulsions en coïncidence par la technique de la particule associée étant effectuée pendant une durée δT comptée à partir d'une référence de temps associée à un instant de détection d'une particule associée, le procédé comprenant pour chaque détection d'impulsions en coïncidence :
- une identification de pixels détecteurs d'au moins une matrice de pixels détecteurs qui détectent des impulsions en coïncidence,
- une vérification du fait qu'au moins trois impulsions en coïncidence ont été détectées par trois pixels détecteurs différents et, si oui,
- une recherche de pixels voisins parmi les pixels qui ont détecté des impulsions en coïncidence,
- une classification des pixels qui ont détecté des impulsions en coïncidence sous la forme de pixels isolés et/ou de groupes de pixels voisins dès lors que des pixels voisins sont identifiés,
- un comptage des pixels isolés et/ou des groupes de pixels voisins qui ont détecté des impulsions en coïncidence,
- une validation de survenue d'un événement pendant la durée δT dès lors qu'au moins trois pixels isolés et/ou groupes de pixels voisins sont comptés à l'étape de comptage des pixels isolés et/ou groupes de pixels voisins,
le procédé comprenant, sur l'ensemble des détections en coïncidence qui surviennent :
- un comptage du nombre des événements validés qui surviennent au dessus d'un seuil temporel compté à partir de la référence de temps,
- une détermination d'un bruit de comptage détecté au dessus du seuil temporel,
- un calcul de seuil d'alarme à partir du bruit de comptage,
- une étape de détermination d'un signal de présence ou d'absence de matière nucléaire dans l'objet sur la base d'une comparaison du nombre des événements validés comptés à l'étape de comptage avec le seuil d'alarme, et
- un calcul d'une probabilité qui traduit le taux de confiance qui est associé au signal de présence ou d'absence de matière nucléaire.

Selon une caractéristique supplémentaire de l'invention, le bruit de comptage détecté au dessus du seuil temporel est soustrait du nombre des événements validés qui surviennent au dessus du seuil temporel de telle sorte que la détermination du signal de présence ou d'absence de matière nucléaire dans l'objet résulte de la comparaison du nombre des événements validés comptés à l'étape de comptage diminué du bruit de comptage avec le seuil d'alarme.

Selon une autre caractéristique supplémentaire de l'invention, l'étape de comptage des événements validés qui surviennent au dessus d'un seuil temporel compté à partir de la référence de temps est une étape de formation d'un histogramme.

Selon encore une autre caractéristique supplémentaire de l'invention, la durée ΔT est prédéterminée à l'avance, de sorte que le comptage du nombre des événements validés qui surviennent au dessus d'un seuil temporel, la détermination du bruit de comptage, le calcul du seuil d'alarme et l'étape de détermination du signal de présence ou d'absence de matière nucléaire sont mis en oeuvre dès lors que la durée ΔT est achevée.

Selon encore une autre caractéristique supplémentaire de l'invention, le comptage du nombre des événements validés qui surviennent au dessus d'un seuil temporel, la détermination du bruit de comptage, le calcul du seuil d'alarme et l'étape de détermination du signal de présence ou d'absence de matière nucléaire sont mis en oeuvre au fur et à mesure des détections en coïncidence successives.

L'invention concerne également un système de détection tel que défini par la revendication 6, qui met en oeuvre le procédé de détection de l'invention.

Des avantages importants du procédé de détection de l'invention sont de pouvoir couvrir un angle solide de détection maximal et de ne pas rejeter un événement quand des détecteurs voisins sont activés. Cela permet ainsi de maximiser les performances de détection par rapport aux procédés de l'art antérieur.

### Brève description des figures

D'autres caractéristiques et avantages de l'invention apparaîtront à la lecture d'un mode de réalisation préférentiel fait en référence aux figures jointes, parmi lesquelles :
- la figure 1 représente le schéma de principe d'un premier exemple de système de détection apte à mettre en oeuvre le procédé de l'invention ;
- la figure 2 représente le schéma de principe d'un deuxième exemple de système de détection apte à mettre en oeuvre le procédé de l'invention ;
- la figure 3 représente un organigramme de validation d'événement qui est mis en oeuvre par le procédé de détection de l'invention ;
- la figure 4 illustre, à titre d'exemple, une détection de particules par des pixels détecteurs d'un système de détection qui met en oeuvre le procédé de l'invention ;
- la figure 5 représente un organigramme d'une première variante du procédé de détection de l'invention ;
- la figure 6 représente la formation d'un histogramme obtenu dans le cadre du procédé de détection de l'invention ;
- la figure 7 représente un organigramme d'une deuxième variante du procédé de détection de l'invention ;

### Exposé détaillé d'un mode de réalisation préférentiel de l'invention.

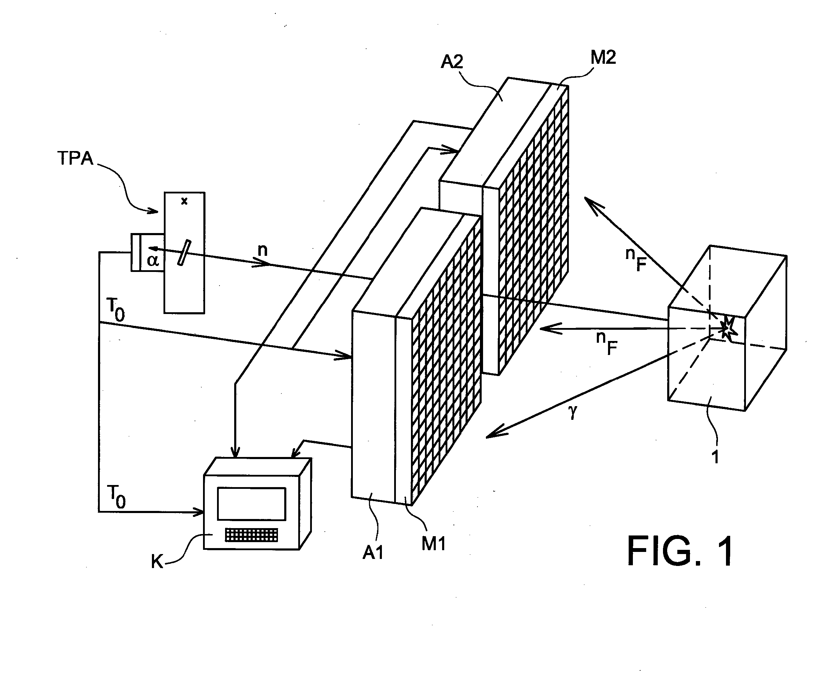

La figure 1 représente le schéma de principe d'un premier exemple de système de détection apte à mettre en oeuvre le procédé de l'invention.

Le système de détection comprend :
- un tube à particule associée TPA qui émet des neutrons rapides n en direction de l'objet 1 à inspecter,
- une structure détectrice constituée de deux matrices de pixels détecteurs M1, M2, aptes à détecter les neutrons n_{F} et les photons gamma γ qui sont émis par l'objet 1,
- un système d'acquisition des signaux délivrés par les matrices de pixels détecteurs, constitué, de façon connue en soi, de deux blocs d'électronique d'acquisition A1, A2 respectivement associés aux matrices de pixels détecteurs M1, M2, et
- un calculateur K qui traite les signaux délivrés par le système d'acquisition.

Dans le tube à particule associée, une particule α est émise simultanément à l'émission d'un neutron rapide n. Il est connu, par ailleurs, que la particule α est émise dans une direction opposée à la direction dans laquelle est émis le neutron rapide. Il s'en suit que la détection de la particule α qui est associée à un neutron rapide conduit à connaître l'instant auquel le neutron rapide est émis et la direction dans laquelle ce neutron est émis. Le neutron rapide est ainsi « signé » par la particule α qui lui est associée. Dans la suite de la description, les neutrons rapides émis par le tube à particule associée seront donc également appelés neutrons rapides « signés ».

Les pixels détecteurs de chacune des deux matrices sont jointifs. Les pixels détecteurs sont préférentiellement des détecteurs à scintillation organiques. La taille de chaque pixel détecteur est dimensionnée pour que chaque pixel détecteur puisse détecter efficacement, à lui seul, neutrons et photons gamma de fission. Les matrices de pixels M1, M2 sont placées côte à côte, à faible distance l'une de l'autre, et présentent une surface détectrice en regard de l'objet 1 à inspecter. Les surfaces détectrices définissent une surface de détection unique amputée seulement de l'espace étroit qui sépare les matrices, espace qui permet le passage des neutrons interrogateurs signés n qui sont émis par le tube TPA.

Le tube à particule associée TPA et l'objet 1 à inspecter sont préférentiellement placés de part et d'autre de la structure détectrice constituée des deux matrices M1, M2. L'optimisation de la surface et de l'épaisseur des matrices de détection M1, M2, ainsi que celle de la taille des pixels, dépend à la fois de paramètres physiques (longueur moyenne d'interaction des neutrons et rayonnements gamma dans le scintillateur, efficacité de détection...) et de contraintes opérationnelles telles que la portabilité (poids, volume) et le coût du système (nombre de voies de mesure).

Le tube à particule associée TPA émet une succession de neutrons interrogateurs signés n en direction de l'objet 1. La trajectoire des neutrons n passe par l'espace qui sépare les deux matrices de pixels avant d'atteindre l'objet 1. Lorsqu'un neutron signé atteint l'objet 1, une réaction de fission nucléaire se produit dans cet objet si celui-ci contient de la matière nucléaire. La réaction de fission nucléaire produit des neutrons rapides n_{F} et des rayons gamma γ qui sont détectés par les matrices M1, M2. Les impulsions issues de la détection des neutrons rapides et des rayons gamma sont traitées par les blocs d'électronique d'acquisition A1, A2 et le calculateur K. Comme cela a déjà été mentionné précédemment, par la technique de la particule associée, une particule α est détectée par le tube TPA lors de l'émission d'un neutron rapide n. L'instant de détection de la particule α permet ainsi de définir un instant de référence Tₒ à partir duquel sont comptés les instants de détection des neutrons et des photons gamma de fission. Cet instant de référence Tₒ est un paramètre qui est appliqué aux blocs d'électronique d'acquisition A1, A2 et au calculateur K.

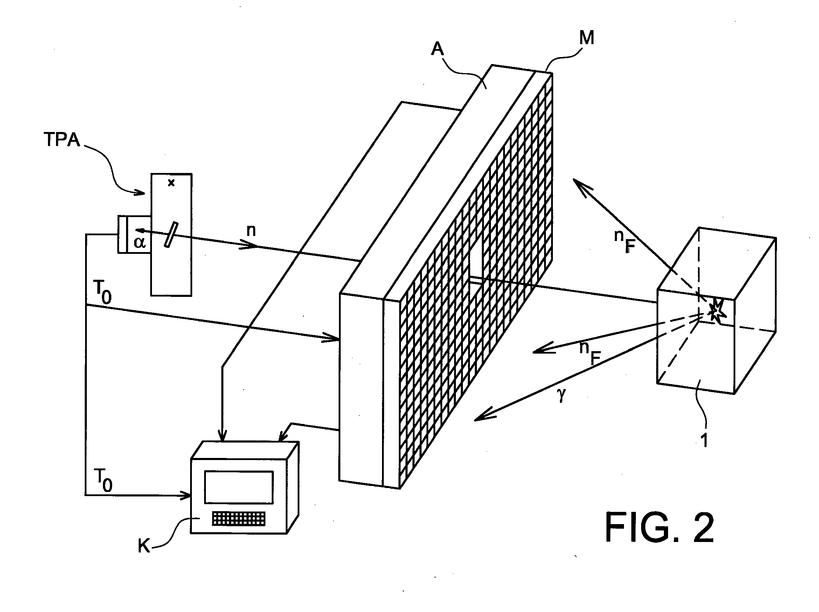

La figure 2 représente le schéma de principe d'un deuxième exemple de système de détection apte à mettre en oeuvre le procédé de l'invention. Sur l'exemple de la figure 2, le système de détection ne comprend qu'une seule matrice M, laquelle matrice M est associée à un seul bloc d'électronique d'acquisition A. Une ouverture O est pratiquée dans la matrice M et dans le bloc d'électronique d'acquisition A pour laisser un passage aux neutrons rapides n émis par le TPA en direction de l'objet 1. L'ouverture pratiquée dans la matrice M a les dimensions d'au moins un pixel détecteur. De façon préférentielle, l'ouverture est centrée par rapport à la surface détectrice que présente la matrice M

Les systèmes de détection représentés aux figures 1 et 2 sont des modes de réalisation préférentiels de l'invention. L'invention concerne cependant d'autres modes de réalisation tels que, par exemple, un système qui comprend une seule matrice détectrice pleine (par matrice « pleine », il faut entendre une matrice dépourvue d'ouverture) décentrée par rapport à l'axe de propagation des neutrons rapides n (cela correspond alors au cas de la figure 1 dans lequel l'une des deux matrices M1, M2 serait absente) ou encore un système qui comprend au moins trois matrices séparées les unes des autres (cela correspond au cas de la figure 1 dans lequel au moins une matrice supplémentaire est présente, à côté des matrices M1, M2, pour agrandir le plan de détection).

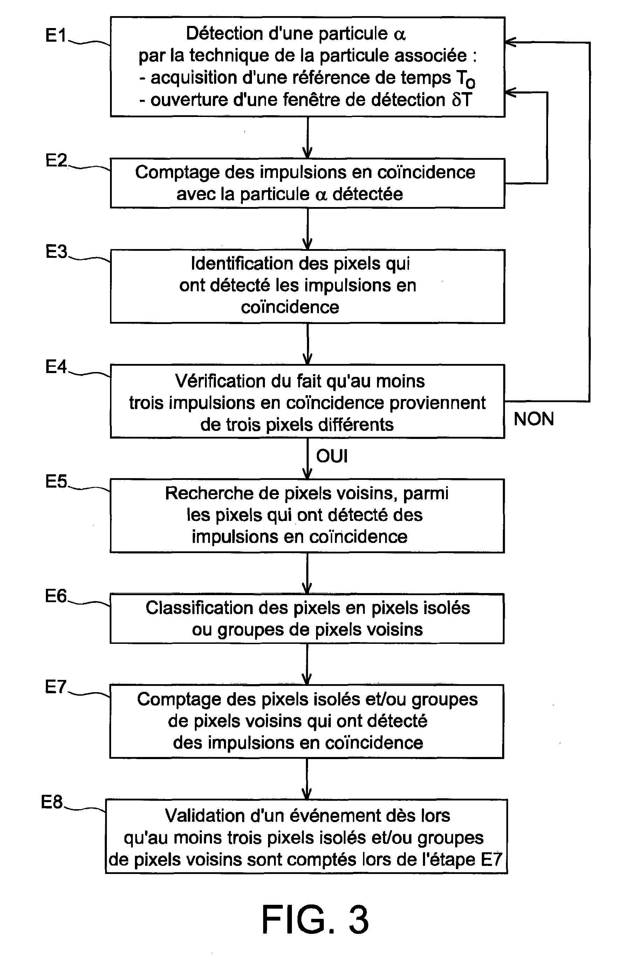

La figure 3 représente l'organigramme d'un procédé de validation d'événement qui est mis en oeuvre par le procédé de détection de l'invention.

Le procédé de validation d'événement comprend successivement :
- une étape E1 de détection de particule α par la technique de la particule associée, la détection de la particule α induisant l'acquisition du temps de référence Tₒ qui déclenche l'ouverture d'une fenêtre temporelle δT de détection des coïncidences,
- une étape E2 de comptage des impulsions en coïncidence avec la particule α détectée,
- une étape E3 d'identification des pixels du système de détection qui ont délivré les impulsions en coïncidence,
- une étape E4 consistant à vérifier si, oui ou non, au moins trois impulsions en coïncidence proviennent de trois pixels détecteurs différents et, si oui,
- une étape E5 de recherche de pixels voisins parmi les pixels qui ont délivré des impulsions en coïncidence,
- une étape E6 de classification des pixels qui ont détecté des impulsions en coïncidence sous la forme de pixels isolés et/ou de groupes de pixels voisins trouvés lors de l'étape E5,
- une étape E7 de comptage des pixels isolés et/ou groupes de pixels voisins qui ont détecté des impulsions en coïncidence, et
- une étape E8 de validation d'un événement dès lors qu'au moins trois pixels isolés et/ou groupes de pixels voisins sont comptés lors de l'étape E7.

Dans le cadre de l'invention, deux pixels d'une matrice de pixels sont dits « voisins » s'ils partagent un même côté ou un même coin. Lorsque le système de l'invention comprend deux matrices de pixels placées côte à côte, une colonne de pixels d'une première matrice est en vis-à-vis d'une colonne de pixels de l'autre matrice. Chaque pixel d'une colonne de pixels est alors voisin, pour la matrice de pixels à laquelle il appartient, d'un pixel selon la règle mentionnée ci-dessus et, pour la matrice de pixels située en vis-à-vis, de tout pixel de la colonne de pixels en vis-à-vis. Lorsque l'invention concerne une matrice de pixels munie d'une ouverture, chaque pixel en bord de l'ouverture est voisin d'un pixel de la matrice selon la règle mentionnée ci-dessus et, en outre, de tous les autres pixels en bord d'ouverture, à l'exception des pixels avec lesquels il est aligné et qui sont situés au-delà du ou des pixels qui lui sont mitoyens. De même, dans le cadre de l'invention, un pixel est dit « isolé » s'il détecte une impulsion sans qu'aucun des pixels qui lui sont voisins ne détecte d'impulsion.

De façon préférentielle, lorsqu'un événement est validé, qu'il comprenne des impulsions issues de pixels isolés et/ou de groupes de pixels voisins, l'instant T₁ qui est associé à l'événement validé, compté à partir de l'instant Tₒ, est défini arbitrairement comme l'instant où une première impulsion est détectée.

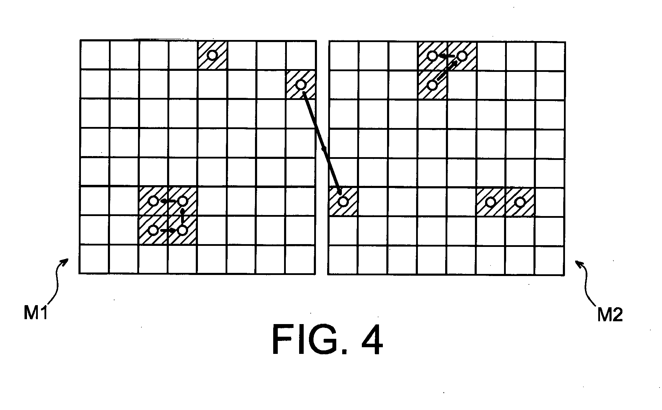

La figure 4 illustre, à titre d'exemple non limitatif, une détection de particules par des pixels détecteurs du système de détection représenté en figure 1.

Toutes les particules détectées (neutrons et/ou rayons gamma) sont des particules en coïncidence avec une particule α. Les matrices M1, M2 sont, par exemple, des matrices 8x8. De façon plus générale cependant, les matrices utilisées dans le cadre de l'invention sont des matrices IxJ où I et J sont des nombres entiers quelconques. Les pixels de la matrice M1 sont référencés Xᵢⱼ (pixel de la ligne de rang i et de la colonne de rang j) et les pixels de la matrice M2 sont référencés Yᵢⱼ (pixel de la ligne de rang i et de la colonne de rang j).

Dans la matrice M1 :
- une même particule est tout d'abord détectée dans le pixel X₇₃, puis dans les pixels X₇₄, X₆₄, X₆₃,
- une particule est détectée dans le pixel X₁₄, et
- une particule est détectée dans le pixel X₂₈.

Dans la matrice M2 :
- une même particule est tout d'abord détectée par le pixel Y₂₄, puis par les pixels Y₁₅ et Y₁₄,
- une particule est détectée par le pixel Y₆₆,
- une particule est détectée par le pixel Y₆₇, et
- la particule détectée dans le pixel X₂₈ est également détectée dans le pixel Y₃₁.

Pour la matrice M1, il est alors considéré qu'une particule est détectée par le pixel X₁₄ et qu'une seule particule est détectée par les pixels X₇₃, X₇₄, X₆₄ et X₆₃. Pour la matrice M2, il est considéré qu'une seule particule est détectée par les pixels Y₂₄, Y₁₅ et Y₁₄ et qu'une seule particule est détectée par les pixels Y₆₆ et Y₆₇. Pour les matrices M1 et M2 prises simultanément, il est considéré qu'une seule particule est détectée par les pixels X₂₈, et Y₆₁.

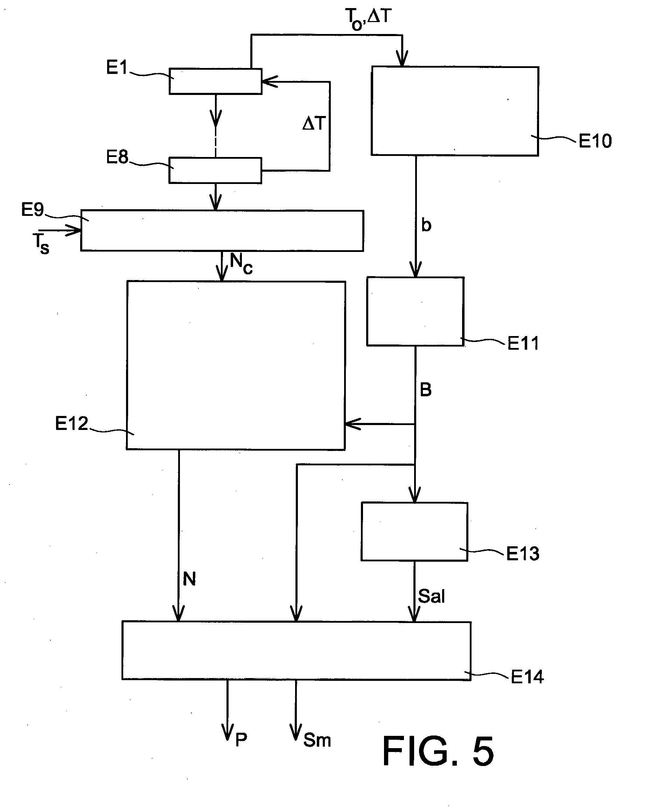

La figure 5 représente un organigramme d'une première variante du procédé de détection de l'invention.

Les étapes E1-E8 mentionnées précédemment sont répétées pendant une durée ΔT fixée à l'avance, par exemple égale à 10mn. Le nombre N_{c} des événements validés qui surviennent, sur l'ensemble de la durée ΔT, au-delà d'un seuil temporel Tₛ est alors compté (étape E9). Le seuil temporel Tₛ définit un instant en dessous duquel il est considéré que les événements survenus ne correspondent majoritairement pas à des fissions qui se produisent dans de la matière nucléaire. Les événements survenus en dessous de l'instant Tₛ sont alors majoritairement considérés comme dus à des réactions qui se produisent dans les matériaux non fissiles qui entourent la matière nucléaire, comme par exemple des réactions de diffusion inélastique (n,n'y). En effet, si de la matière nucléaire est présente dans l'objet étudié, celle-ci est, de fait, dissimulée dans des colis d'apparence bénigne (paquets, bagages, conteneurs de transport, etc.) et elle est, de surcroit, entourée de matériaux spécifiques destinés à former des écrans efficaces contre les rayonnements neutroniques et gamma comme, par exemple, le polyéthylène, le fer ou le plomb. Pour ces matériaux, en raison des multiples rayonnements gamma et neutroniques qu'ils peuvent émettre simultanément suite à leur interaction avec un neutron signé, le nombre de coups détectés est souvent très important à des instants très proches de l'instant Tₒ et, bien que des événements réellement dus à des fissions puissent être détectés avant l'instant Tₛ, le risque de fausse alarme serait beaucoup trop élevé si l'on prenait en compte ces événements. En fonction des dimensions de l'objet inspecté et de la distance entre les pixels détecteurs et l'objet inspecté, il est donc défini un seuil temporel Tₛ, compté à partir du temps Tₒ, en dessous duquel les événements ne sont pas pris en compte.

Parallèlement à la répétition des étapes E1-E8, des mesures du bruit aléatoire b qui est présent en dehors des fenêtres d'acquisition δT sont effectuées (étape E10). Ces mesures du bruit aléatoire b sont effectuées, par exemple, de façon connue en soi, sur des intervalles de temps qui précèdent les instants Tₒ (temps « négatifs »). A partir des mesures de bruit b, le bruit B qui est présent, au-delà des instants Tₛ successifs, sur l'ensemble de la durée ΔT est alors déterminé (étape E11).

A l'issue des étapes E9 et E11, c'est-à-dire à la fin de la durée ΔT, une étape E12 soustrait le bruit B des N_{c} événements comptés à l'étape E9. Il résulte de l'étape E12 un nombre N d'événements validés.

Parallèlement à l'étape E12 qui calcule le nombre N d'événements validés, a lieu une étape E13 de calcul d'un seuil d'alarme Sₐₗ. Le seuil d'alarme Sₐₗ est calculé à partir de la valeur du bruit B comme étant égal, par exemple, à deux fois l'écart-type du bruit B. Le nombre N d'événements validés est ensuite comparé au seuil d'alarme Sₐₗ.

Il résulte de la comparaison de N et Sₐₗ l'obtention d'un signal Sₘ qui indique la présence (si Sₐₗ ≤ N) ou l'absence (si Sₐₗ > N) de matière nucléaire. Le signal Sₘ est accompagné d'une probabilité P qui exprime le niveau de confiance avec lequel la présence ou l'absence de matière nucléaire doit être considérée, c'est-à-dire le risque de fausse alarme quand la présence de matière nucléaire est annoncée et celui de non détection quand c'est l'absence de matière nucléaire qui est annoncée. La probabilité P est calculée, de façon connue en soi, à partir de N et du bruit B.

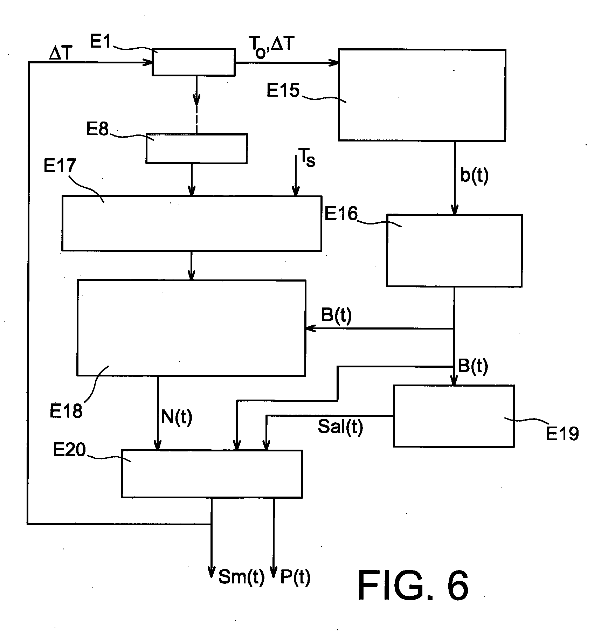

La figure 6 représente un organigramme d'une deuxième variante du procédé de détection de l'invention.

Selon la deuxième variante du procédé de détection de l'invention, la durée ΔT n'est pas fixée à l'avance et la comparaison avec le seuil d'alarme du nombre d'événements validés comptés qui surviennent au-delà des instants Ts successifs se fait au fur et à mesure des détections qui surviennent dans les fenêtres d'acquisition successives. Aux étapes E9, E10, E11, E12, E13, E14 de la première variante du procédé de l'invention mises en oeuvre sur l'ensemble de la durée prédéterminée ΔT correspondent ici les étapes respectives E17, E15, E16, E18, E19, E20 mises en oeuvre, en fonction du temps, au fur et à mesure des détections successives.

Il résulte ainsi de l'étape E18 l'obtention, en temps réel, d'un nombre N(t) d'événements comptés dépourvus de bruit susceptibles de correspondre à des fissions se produisant dans de la matière nucléaire. Un seuil d'alarme Sₐₗ(t) est calculé à partir du bruit B(t) à l'étape E19. Le nombre N(t) est ensuite comparé au seuil d'alarme Sₐₗ(t) lors de l'étape E20. Il résulte de l'étape E20 un signal Sₘ(t) qui traduit la présence ou l'absence de matière nucléaire et une probabilité P(t) qui traduit le niveau de confiance avec lequel le signal Sₘ(t) doit être considéré. Tant que le nombre N(t) reste inférieur à Sₐₗ(t), le signal Sₘ(t) indique qu'il n'y a pas de matière nucléaire dans l'objet et de nouvelles étapes de validation sont effectuées. Dès que le nombre N(t) atteint le seuil d'alarme Sₐₗ(t), le signal Sₘ(t) informe de la présence de matière nucléaire et la probabilité P(t) indique le taux de confiance associé à cette information. Le comptage est alors interrompu. Le comptage peut également être poursuivi, sur décision de l'opérateur, pour évaluer l'évolution du taux de confiance qui est associé à l'information de présence de matière nucléaire. A contrario, lorsque le signal Sₘ(t) indique l'absence de matière nucléaire et que le taux de confiance associé à cette information d'absence de matière nucléaire élevé pendant une durée importante, l'opérateur est amené à interrompre le comptage.

Selon les première et deuxième variantes du procédé de l'invention décrites ci-dessus, la détermination du signal de présence ou d'absence de matière nucléaire résulte de la comparaison du nombre des événements validés qui surviennent au dessus du seuil temporel Tₛ avec le seuil d'alarme, le nombre d'événements validés et le seuil d'alarme étant chacun diminué du bruit de comptage B. Dans un autre mode de réalisation de l'invention, la détermination du signal de présence ou d'absence de matière nucléaire résulte d'une comparaison du nombre des événements validés qui surviennent au dessus du seuil temporel Tₛ avec le bruit de comptage, sans que ceux-ci ne soient diminués du bruit de comptage. La comparaison du nombre N_{c} d'événements et du seuil d'alarme conduit également à l'obtention d'un signal qui indique la présence ou l'absence de matière nucléaire dans l'objet inspecté. La probabilité avec laquelle le signal obtenu doit être pris en compte est également calculée.

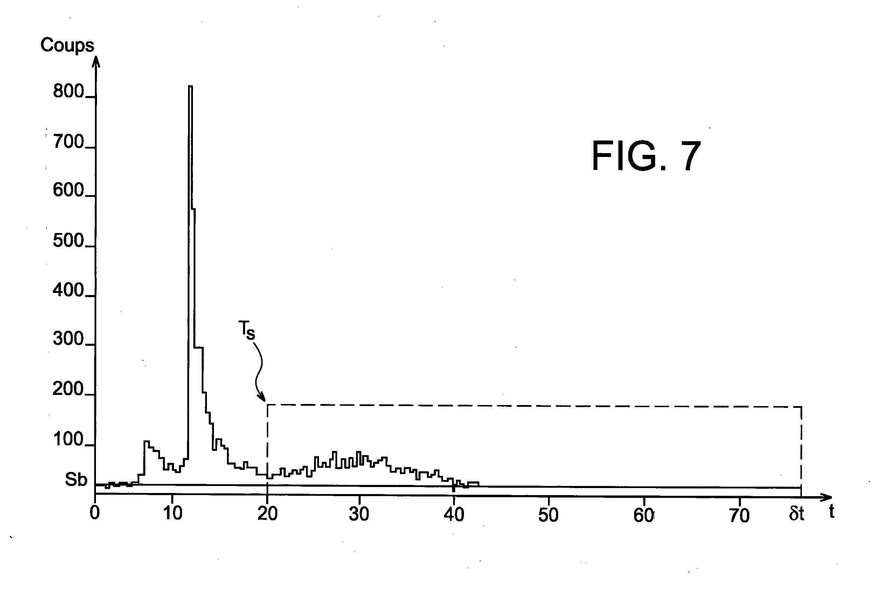

La figure 7 représente, à titre d'exemple, un histogramme obtenu selon le mode de réalisation préférentiel de l'invention.

L'étape de comptage des événements validés est ici une étape de formation de l'histogramme de l'ensemble des événements validés qui surviennent pendant la durée ΔT. Comme cela a été mentionné précédemment, chaque événement est positionné, dans l'histogramme, par un instant T₁ compté à partir de l'instant Tₒ. Parmi les événements validés, seuls sont comptés les événements situés au-delà de l'instant Tₛ. La durée δt de la fenêtre d'acquisition est, par exemple, égale à 76ns et le temps Tₛ, par exemple égal à 20ns. Il apparaît clairement sur la figure 7 la détection d'un grand nombre de coups en dessous du seuil Tₛ. L'histogramme de la figure 7 comprend les événements de bruit (niveau de bruit Sb) dont l'accumulation sur l'intervalle ΔT est la mesure de bruit B mentionnée précédemment.

## Revendications

1. Procédé de détection de matière nucléaire dans un objet sur la base d'un comptage d'événements qui surviennent dans l'objet à la suite d'une interrogation neutronique de l'objet pendant une durée ΔT, le procédé comprenant une pluralité d'étapes de détection d'impulsions en coïncidence à l'aide d'un tube à particule associée (E1, E2), dans lequel une particule associée est émise simultanément à l'émission d'un neutron rapide, dans une direction opposée à la direction dans laquelle est émis le neutron rapide, une étape de détection d'impulsions en coïncidence étant effectuée pendant une durée δT comptée à partir d'une référence de temps (Tₒ) associée à un instant de détection d'une particule associée, le procédé comprenant pour chaque détection d'impulsions en coïncidence :
- une identification (E3) de pixels détecteurs d'au moins une matrice de pixels détecteurs qui détectent des impulsions en coïncidence,
- une vérification (E4) du fait qu'au moins trois impulsions en coïncidence ont été détectées par trois pixels détecteurs différents et, si oui,
- une recherche de pixels voisins (E5) parmi les pixels qui ont détecté des impulsions en coïncidence,
- une classification (E6) des pixels qui ont détecté des impulsions en coïncidence sous la forme de pixels isolés et/ou de groupes de pixels voisins dès lors que des pixels voisins sont identifiés,
- un comptage (E7) des pixels isolés et/ou des groupes de pixels voisins qui ont détecté des impulsions en coïncidence,
- une validation de survenue d'un événement (E8) pendant la durée δT dès lors qu'au moins trois pixels isolés et/ou groupes de pixels voisins sont comptés à l'étape de comptage des pixels isolés et/ou groupes de pixels voisins,
et le procédé comprenant, sur l'ensemble des détections en coïncidence qui surviennent:
- un comptage (E9) du nombre des événements validés qui surviennent au dessus d'un seuil temporel (Tₛ) compté à partir de la référence de temps (Tₒ),
- une détermination d'un bruit de comptage (E10, E11) détecté au dessus du seuil temporel (Tₛ),
- un calcul de seuil d'alarme (Sₐₗ) à partir du bruit de comptage (B),
- une étape de détermination d'un signal (Sₘ) de présence ou d'absence de matière nucléaire dans l'objet sur la base d'une comparaison (E15) du nombre des événements validés comptés à l'étape de comptage (E9) avec le seuil d'alarme, et
- un calcul d'une probabilité (P) qui traduit le taux de confiance qui est associé au signal (Sₘ) de présence ou d'absence de matière nucléaire.

2. Procédé de détection selon la revendication 1, dans lequel le bruit de comptage détecté au dessus du seuil temporel (Tₛ) est soustrait du nombre des événements validés qui surviennent au dessus du seuil temporel (Tₛ) de telle sorte que la détermination du signal de présence ou d'absence de matière nucléaire dans l'objet résulte de la comparaison du nombre des événements validés comptés à l'étape de comptage diminué du bruit de comptage avec le seuil d'alarme.

3. Procédé de détection selon la revendication 1 ou 2, dans lequel l'étape de comptage (E9) des événements validés qui surviennent au dessus d'un seuil temporel (Tₛ) compté à partir de la référence de temps (Tₒ) est une étape de formation d'un histogramme.

4. Procédé de détection selon l'une quelconque des revendications 1 à 3, dans lequel la durée ΔT est prédéterminée à l'avance, de sorte que le comptage du nombre des événements validés qui surviennent au dessus d'un seuil temporel, la détermination du bruit de comptage, le calcul du seuil d'alarme et l'étape de détermination du signal de présence ou d'absence de matière nucléaire sont mis en oeuvre dès lors que la durée ΔT est achevée.

5. Procédé de détection selon l'une quelconque des revendications 1 à 3, dans lequel le comptage du nombre des événements validés qui surviennent au dessus d'un seuil temporel, la détermination du bruit de comptage, le calcul du seuil d'alarme et l'étape de détermination du signal de présence ou d'absence de matière nucléaire sont mis en oeuvre au fur et à mesure des détections en coïncidence successives.

6. Système de détection de matière nucléaire dans un objet (1) sur la base d'un comptage d'événements qui surviennent dans l'objet à la suite d'une interrogation neutronique de l'objet pendant une durée ΔT, le système comprenant un tube à particule associée (TPA) qui émet des neutrons (n) en direction de l'objet et au moins une matrice de pixels détecteurs (M1, M2) aptes à détecter des impulsions en coïncidence à l'aide d'un tube à particule associée, dans lequel une particule associée est émise simultanément à l'émission d'un neutron rapide, dans une direction opposée à la direction dans laquelle est émis le neutron rapide, une détection d'impulsions en coïncidence étant effectuée pendant une durée δT comptée à partir d'une référence de temps (Tₒ) associée à un instant de détection d'une particule associée, le système comprenant :
- des moyens d'identification (E3) de pixels détecteurs qui détectent des impulsions en coïncidence,
- des moyens de vérification (E4) du fait qu'au moins trois impulsions en coïncidence ont été détectées par trois pixels détecteurs différents,
- des moyens de recherche de pixels détecteurs voisins (E5), parmi les pixels qui ont détecté des impulsions en coïncidence, si au moins trois impulsions en coïncidence ont été détectées par trois pixels détecteurs différents,
- des moyens de classification (E6) des pixels qui ont détecté des impulsions en coïncidence sous la forme de pixels isolés et/ou de groupes de pixels voisins dès lors que des pixels voisins sont identifiés,
- des moyens de comptage (E7) des pixels isolés et/ou des groupes de pixels voisins qui ont détecté des impulsions en coïncidence,
- des moyens de validation de survenue d'un événement (E8) pendant la durée δT dès lors qu'au moins trois pixels isolés et/ou groupes de pixels voisins sont comptés par les moyens de comptage des pixels isolés et/ou des groupes de pixels voisins,
- des moyens de comptage (E9) des événements validés qui surviennent sur l'ensemble pendant la durée ΔT au dessus d'un seuil temporel (Tₛ) compté à partir de la référence de temps (Tₒ),
- des moyens de détermination d'un bruit de comptage (E10, E11) détecté, pendant la durée ΔT, au dessus du seuil temporel (Tₛ),
- des moyens de calcul (E14) d'un seuil d'alarme (Sₐₗ) à partir du bruit de comptage (B),
- des moyens de détermination d'un signal (Sₘ) de présence ou d'absence de matière nucléaire dans l'objet, sur la base d'une comparaison (E15) du nombre des événements validés comptés par les moyens de comptage des événements validés avec le seuil d'alarme, et
- des moyens de calcul d'une probabilité (P) qui traduit le taux de confiance associé au signal (Sₘ) de présence ou d'absence de matière nucléaire.

7. Système selon la revendication 6, dans lequel deux matrices de pixels détecteurs (M1, M2) sont placées côte à côte, une colonne de pixels d'une première matrice (M1) étant en vis-à-vis d'une colonne de pixels de la deuxième matrice, les surfaces détectrices des deux matrices étant situées dans un même plan en regard de l'objet, la trajectoire des neutrons (n) qui sont émis par le tube à particule associée (TPA) passant par l'espace qui sépare les deux matrices de pixels détecteurs, deux pixels voisins d'une même matrice étant des pixels qui partagent un même côté ou un même coin et tout pixel de la colonne de pixels de la première matrice, respectivement de la deuxième matrice, étant un pixel voisin pour tout pixel de la colonne de pixels de la deuxième matrice, respectivement de la première matrice.

8. Système selon la revendication 6, dans lequel une matrice de détection (M) est placée sur la trajectoire des neutrons (n) qui sont émis par le tube à particule associée (TPA), la matrice de détection étant munie d'une ouverture (0) apte à laisser passer les neutrons, deux pixels voisins de la matrice étant des pixels qui partagent un même côté ou un même coin, tout pixel en bord de l'ouverture (0) étant un pixel voisin de tout autre pixel en bord d'ouverture, à l'exception des pixels avec lesquels il est aligné et qui sont situés au-delà du ou des pixels qui lui sont mitoyens.

9. Système selon l'une quelconque des revendications 6 à 8, dans lequel les pixels détecteurs sont des scintillateurs organiques.

## Patentansprüche

1. Verfahren zur Erfassung von nuklearem Material in einem Objekt auf der Basis einer Zählung von Ereignissen, die in dem Objekt in Folge einer Neutronenabfrage des Objekts während einer Dauer ΔT auftreten, wobei das Verfahren eine Mehrzahl von Schritten zur Erfassung von Koinzidenzpulsen mit Hilfe eines Rohrs für ein zugeordnetes Partikel (E1, E2) umfasst, wobei ein zugeordnetes Partikel gleichzeitig mit der Emission eines schnellen Neutrons in einer Richtung emittiert wird, die entgegengesetzt ist zu der Richtung, in der das schnelle Neutron emittiert wird, wobei ein Schritt zur Erfassung von Koinzidenzpulsen während einer Dauer *δ*T durchgeführt wird, gerechnet ab einer Referenzzeit (To), die einem Zeitpunkt der Erfassung eines zugeordneten Partikels zugeordnet ist, wobei das Verfahren für jede Erfassung von Koinzidenzpulsen Folgendes umfasst:
- eine Identifizierung (E3) von Detektorpixeln wenigstens einer Detektorpixelmatrix, die Koinzidenzpulse erfassen,
- eine Überprüfung (E4) der Tatsache, dass wenigstens drei Koinzidenzpulse durch drei verschiedene Detektorpixel erfasst wurden, und bejahendenfalls
- eine Suche nach Nachbarpixeln (E5) aus den Pixeln, die Koinzidenzpulse erfasst haben.
- eine Klassifizierung (E6) der Pixel, die Koinzidenzpulse erfasst haben, in der Form von isolierten Pixeln und/oder von Nachbarpixelgruppen, sobald Nachbarpixel identifiziert sind,
- eine Zählung (E7) der isolierten Pixel und/oder der Nachbarpixelgruppen, die Koinzidenzpulse erfasst haben,
- eine Validierung des Auftretens eines Ereignisses (E8) während der Dauer *δ*T, sobald wenigstens drei isolierte Pixel und/oder Nachbarpixelgruppen im Schritt der Zählung der isolierten Pixel und/oder Nachbarpixelgruppen gezählt sind,
und wobei das Verfahren auf der Gesamtheit der auftretenden Koinzidenzerfassungen Folgendes umfasst:
- eine Zählung (E9) der Zahl der validierten Ereignisse, die auftreten über einer Zeitschwelle (Ts), gezählt ab der Referenzzeit (To),
- eine Bestimmung eines Zählrauschens (E10, E11), erfasst über der Zeitschwelle (Ts),
- eine Berechnung einer Alarmschwelle (Sₐ₁) ausgehend von dem Zählrauschen (B),
- einen Schritt der Bestimmung eines Signals (Sₘ) des Vorhandenseins oder des Fehlens von nuklearem Material in dem Objekt auf Grundlage eines Vergleichs (E15) der Zahl von validierten Ereignissen, die im Zählschritt (E9) gezählt werden, mit der Alarmschwelle, und
- eine Berechnung einer Wahrscheinlichkeit (P) die den Zuverlässigkeitsgrad ausdrückt, welcher dem Signal (Sₘ) des Vorhandenseins oder des Fehlens von nuklearem Material zugeordnet ist.

2. Verfahren zur Erfassung nach Anspruch 1, bei dem das über der Zeitschwelle (Ts) erfasste Zählrauschen subtrahiert wird von der Zahl der validierten Ereignisse, die über der Zeitschwelle (Ts) auftreten, derart, dass die Bestimmung des Signals des Vorhandenseins oder des Fehlens von nuklearem Material in dem Objekt aus dem Vergleich der Zahl der validierten Ereignisse, gezählt im Zählschritt, verringert um das Zählrauschen, mit der Alarmschwelle resultiert.

3. Verfahren zur Erfassung nach Anspruch 1 oder 2, bei dem der Schritt des Zählens (E9) der validierten Ereignisse, die über einer Zeitschwelle (Ts) auftreten, gezählt ab der Referenzzeit (To) ein Schritt der Bildung eines Histogramms ist.

4. Verfahren zur Erfassung nach einem der Ansprüche 1 bis 3, bei dem die Dauer ΔT im Voraus vorbestimmt ist, derart, dass das Zählen der Zahl der validierten Ereignisse, die über einer Zeitschwelle auftreten, die Bestimmung des Zählrauschens, die Berechnung der Alarmschwelle und der Schritt der Bestimmung des Signals des Vorhandenseins oder des Fehlens von nuklearem Material durchgeführt werden, sobald die Dauer ΔT erreicht ist.

5. Verfahren zur Erfassung nach einem der Ansprüche 1 bis 3, bei dem das Zählen der Zahl der validierten Ereignisse, die über einer Zeitschwelle auftreten, die Bestimmung des Zählrauschens, die Berechnung der Alarmschwelle und der Schritt der Bestimmung des Signals des Vorhandenseins oder des Fehlens von nuklearem Material nacheinander im Verlauf von aufeinanderfolgenden Koinzidenzerfassungen durchgeführt werden.

6. System zur Erfassung von nuklearem Material in einem Objekt (1) auf Grundlage einer Zählung von Ereignissen, die in dem Objekt in Folge einer Neutronenabfrage des Objekts während einer Dauer ΔT auftreten, wobei das System ein Rohr für ein zugeordnetes Partikel (TPA) umfasst, das Neutronen (n) in Richtung des Objekts emittiert, sowie wenigstens eine Detektorpixelmatrix (M1, M2), die dazu ausgelegt ist, Koinzidenzpulse mit Hilfe eines Rohrs für ein zugeordnetes Partikel zu erfassen, wobei ein zugeordnetes Partikel gleichzeitig mit der Emission eines schnellen Neutrons in einer Richtung emittiert wird, die entgegengesetzt ist zu der Richtung, in der das schnelle Neutron emittiert wird, wobei eine Erfassung von Koinzidenzpulsen während einer Dauer *δ*T durchgeführt wird, gezählt ab einer Referenzzeit (To), die einem Zeitpunkt der Erfassung eines zugeordneten Partikels zugeordnet ist, wobei das System umfasst:
- Mittel zum Identifizieren (E3) von Detektorpixeln, die Koinzidenzpulse erfassen,
- Mittel zum Überprüfen (E4) der Tatsache, dass wenigstens drei Koinzidenzpulse durch drei verschiedene Detektorpixel erfasst worden sind,
- Mittel zum Suchen von Nachbardetektorpixeln (E5) aus den Pixeln, die Koinzidenzpulse erfasst haben, wenn wenigstens drei Koinzidenzpulse durch drei verschiedene Detektorpixel erfasst worden sind,
- Mittel zum Klassifizieren (E6) der Pixel, die Koinzidenzpulse erfasst haben, in der Form von isolierten Pixeln und/oder von Nachbarpixelgruppen, sobald Nachbarpixel identifiziert worden sind,
- Mittel zum Zählen (E7) der isolierten Pixel und/oder der Nachbarpixelgruppen, die Koinzidenzpulse erfasst haben,
- Mittel zur Validierung des Auftretens eines Ereignisses (E8) während der Dauer *δ*T, sobald wenigstens drei isolierte Pixel und/oder Nachbarpixelgruppen gezählt worden sind, durch die Mittel zum Zählen der isolierten Pixel und/oder der Nachbarpixelgruppen,
- Mittel zum Zählen (E9) der validierten Ereignisse, die auf der Gesamtheit während der Dauer ΔT über einer Zeitschwelle (Ts) auftreten, gezählt ab der Referenzzeit (To),
- Mittel zur Bestimmung eines Zählrauschens (E10, E11), welches während der Dauer ΔT über der Zeitschwelle (Ts) erfasst wird,
- Mittel zum Berechnen (E14) einer Alarmschwelle (Sₐ₁) ausgehend von dem Zählrauschen (B),
- Mittel zur Bestimmung eines Signals (Sₘ) des Vorhandenseins oder des Fehlens von nuklearem Material in dem Objekt auf der Grundlage eines Vergleichs (E15) der Zahl der validierten Ereignisse, gezählt durch die Mittel zum Zählen der validierten Ereignisse, mit der Alarmschwelle, und
- Mittel zum Berechnen einer Wahrscheinlichkeit (P) die den Zuverlässigkeitsgrad ausdrückt, welcher dem Signal (Sₘ) des Vorhandenseins oder des Fehlens von nuklearem Material zugeordnet ist.

7. System nach Anspruch 6, wobei zwei Detektorpixelmatrizen (M1, M2) Seite an Seite platziert sind, wobei eine Spalte von Pixeln einer ersten Matrix (M1) einer Spalte von Pixeln der zweiten Matrix gegenüberliegt, wobei die Detektoroberflächen der zwei Matrizen in ein und derselben Ebene gegenüber dem Objekt liegen, wobei die Trajektorie der Neutronen (n), die emittiert werden durch das Rohr für ein zugeordnetes Partikel (TPA) durch den Raum verlaufen, der die zwei Detektorpixelmatrizen trennt, wobei zwei Nachbarpixel ein und derselben Matrix Pixel sind, die ein und dieselbe Seite oder ein und dieselbe Ecke teilen, und wobei jedes Pixel der Spalte von Pixeln der ersten Matrix bzw. der zweiten Matrix ein Nachbarpixel für jedes Pixel der Spalte von Pixeln der zweiten Matrix bzw. der ersten Matrix ist.

8. System nach Anspruch 6, wobei eine Erfassungsmatrix (M) auf der Trajektorie der Neutronen (n) platziert ist, die durch das Rohr für ein zugeordnetes Partikel (TPA) emittiert werden, wobei die Erfassungsmatrix mit einer Öffnung (O) ausgestattet ist, die dazu ausgelegt ist, die Neutronen passieren zu lassen, wobei zwei Nachbarpixel der Matrix Pixel sind, die ein und dieselbe Seite oder ein und dieselbe Ecke teilen, wobei jedes Pixel am Rand der Öffnung (O) ein Nachbarpixel zu jedem anderen Pixel am Rand der Öffnung ist, ausgenommen Pixel, mit denen es ausgerichtet ist und die jenseits des oder der Pixel liegen, die ihm angrenzend sind.

9. System nach einem der Ansprüche 6 bis 8, wobei die Detektorpixel organische Szintillatoren sind.

## Claims

1. A method for detecting nuclear material in an object on the basis of a count of events occurring in the object following a neutron interrogation of the object for a duration ΔT, where the method includes multiple steps of detection of coinciding pulses using an associated particle tube (E1, E2), in which an associated particle is emitted simultaneously with the emission of a fast neutron, in a direction opposite the direction in which the fast neutron is emitted, where a step of detecting coinciding pulses is performed for a duration δT counted from a time reference (Tₒ) associated with an instant of detection of an associated particle, the method comprising, for each detection of coinciding pulses:
- an identification (E3) of detector pixels of at least one matrix of detector pixels which detect coinciding pulses,
- a check (E4) that at least three coinciding pulses have been detected by three different detector pixels and, if so,
- a search for adjoining pixels (E5) among the pixels which have detected coinciding pulses,
- a classification (E6) of the pixels which have detected coinciding pulses in the form of isolated pixels and/or groups of adjoining pixels if adjoining pixels are identified,
- a count (E7) of the isolated pixels and/or of the groups of adjoining pixels which have detected coinciding pulses,
- a validation of occurrence of an event (E8) during duration δT if at least three isolated pixels and/or groups of adjoining pixels are counted in the step of counting the isolated pixels and/or groups of adjoining pixels,
and the method comprising, for all the coinciding detections which occur:
- a count (E9) of the number of validated events which occur above a time threshold (Tₛ) counted from the time reference (Tₒ),
- a determination of a shot noise (E10, E11) detected above the time threshold (Tₛ),
- a calculation of an alarm threshold (Sₐₗ) on the basis of the shot noise (B),
- a step of determination of a signal (Sₘ) of the presence or absence of nuclear material in the object on the basis of a comparison (E15) of the number of validated events counted in the counting step (E9) with the alarm threshold, and
- a calculation of a probability (P) which reflects the rate of confidence which is associated with the signal (Sₘ) of the presence or absence of nuclear material.

2. A detection method according to claim 1, in which the shot noise detected above the time threshold (Tₛ) is subtracted from the number of validated events which occur above the time threshold (Tₛ), such that the determination of the signal of the presence or absence of nuclear material in the object results from a comparison of the number of validated events counted in the counting step, minus the shot noise with the alarm threshold.

3. A detection method according to claim 1 or 2, in which the step (E9) of counting the validated events which occur above a time threshold (Tₛ) counted from the time reference (Tₒ) is a step of formation of a histogram.

4. A detection method according to any one of claims 1 to 3, in which duration ΔT is predetermined in advance, such that the counting of the number of validated events which occur above a time threshold, the determination of the shot noise, the calculation of the alarm threshold and the step of determination of the signal of the presence or absence of nuclear material are implemented once duration ΔT is completed.

5. A detection method according to any one of claims 1 to 3, in which the counting of the number of validated events which occur above a time threshold, the determination of the shot noise, the calculation of the alarm threshold and the step of determination of the signal of the presence or absence of nuclear material are implemented as the successive coinciding detections occur.

6. A system for detecting nuclear material in an object (1) on the basis of a count of events occurring in the object following a neutron interrogation of the object for a duration ΔT, where the system includes an associated particle tube (TPA) which emits neutrons (n) in the direction of the object, and at least one matrix of detector pixels (M1, M2) able to detect coinciding pulses using an associated particle tube, in which an associated particle is emitted simultaneously with the emission of a fast neutron, in a direction opposite the direction in which the fast neutron is emitted, where a step of detecting coinciding pulses is performed for a duration 6T counted from a time reference (Tₒ) associated with an instant of detection of an associated particle, the system comprising:
- means (E3) of identifying detector pixels which detect coinciding pulses,
- means (E4) to check that at least three coinciding pulses have been detected by three different detector pixels,
- means (E5) to seek adjoining detector pixels, among the pixels which have detected coinciding pulses, if at least three coinciding pulses have been detected by three different detector pixels,
- means (E6) of classifying the pixels which have detected coinciding pulses in the form of isolated pixels and/or groups of adjoining pixels if adjoining pixels are identified,
- means (E7) of counting the isolated pixels and/or of the groups of adjoining pixels which have detected coinciding pulses,
- means (E8) of validating the occurrence of an event during duration δT if at least three isolated pixels and/or groups of adjoining pixels are counted in the step of counting the isolated pixels and/or groups of adjoining pixels,
- means (E9) of counting the number of validated events which occur overall during duration ΔT above a time threshold (Tₛ) counted from the time reference (Tₒ),
- means (E10, E11) of determining a shot noise detected, during duration ΔT, above the time threshold (Tₛ),
- means (E14) of calculating an alarm threshold (Sₐₗ) on the basis of the shot noise (B),
- means of determining a signal (Sₘ) of the presence or absence of nuclear material in the object on the basis of a comparison (E15) of the number of validated events counted by the means of counting the validated events with the alarm threshold, and
- means for calculating a probability (P) which reflects the rate of confidence which is associated with the signal (Sₘ) of the presence or absence of nuclear material.

7. A system according to claim 6, in which two matrices of detector pixels (M1, M2) are positioned side-by-side, where a column of pixels of a first matrix (M1) is facing a column of pixels of the second matrix, where the detector surfaces of both matrices are positioned in the same plane opposite the object, where the trajectory of the neutrons (n) which are emitted by the associated particle tube (TPA) passes through the space separating the two matrices of detector pixels, where two adjoining pixels of a given matrix are pixels which have a given side or a given corner in common and where every pixel of the column of pixels of the first matrix, respectively of the second matrix, is an adjoining pixel for every pixel of the column of pixels of the second matrix, respectively of the first matrix.

8. A system according to claim 6, in which a detection matrix (M) is positioned on the trajectory of the neutrons (n) which are emitted by the associated particle tube (TPA), where the detection matrix has an aperture (O) able to allow the neutrons to pass, where two adjoining pixels of the matrix are pixels which have a given side or a given corner in common, where every pixel at the edge of the aperture (O) is a pixel which is adjoining to every other pixel at the edge of the aperture, except for the pixels with which it is aligned, and which are located beyond the pixel or pixels which are adjacent to it.

9. A system according to any one of claims 6 to 8, in which the detector pixels are organic scintillators.
